# FASCICULE DE BREVET EUROPEEN

(11) **EP 0 468 834 B1**
(45) Date de publication et mention de la délivrance du brevet: **25.08.1993**
(21) Numéro de dépôt: 91401750.4
(22) Date de dépôt: 27.06.1991
(51) Int. Cl.: F04B 11/00, F04B 49/00

(54) **Pompe hydraulique à cycle alternatif**
Flüssigkeitspumpe mit hin- und hergehendem Kolben
Hydraulic alternating piston pump

(30) Priorité: 26.07.1990 FR 9009560
(43) Date de publication de la demande: 29.01.1992
(73) Titulaire: ALLIEDSIGNAL EUROPE SERVICES TECHNIQUES, 93700 Drancy (FR)
(72) Inventeur: Lebret, Pierre, Bendix Europe, F-93700 Drancy (FR)
(74) Mandataire: Bentz, Jean-Paul

(56) Documents cités:
- EP-A- 0 327 218
- DE-C- 115 392
- US-A- 2 696 788

## Description

La présente invention concerne une pompe hydraulique comportant au moins un piston à cycle alternatif coulissant dans un cylindre fixe, cette pompe comportant en outre un clapet anti-retour d'aspiration disposé entre une source de fluide sous basse pression et une chambre de travail définie dans le cylindre, et un premier clapet anti-retour de refoulement disposé entre la chambre de travail et une chambre de sortie du fluide sous haute pression.

Une telle pompe est communément mise en oeuvre dans les circuits hydrauliques de freinage comprenant notamment un système d'anti-blocage des roues.

Le document EP-A-0 327 218 décrit par exemple une telle pompe dans une application telle qu'indiquée précédemment. Les pompes de ce type présentent l'inconvénient majeur de générer du bruit et des vibrations essentiellement au moment où la pompe commence à refouler.

On a constaté que les niveaux de bruits et de vibrations dépendent pour beaucoup du remplissage de la chambre de travail de la pompe et de la pression régnant dans la chambre de sortie de la pompe au début du refoulement.

On connaît de DE-C-115 392 une pompe à double effet dont la puissance est limitée par une mise en communication de l'une des chambres de travail en période de refoulement avec l'autre en période d'aspiration à partir d'une certaine course du piston de part et d'autre d'un point médian. Cette pompe ne prévoit pas le gavage d'une chambre de travail.

La présente invention a pour but d'obvier aux inconvénients précités sans pour autant affecter sensiblement le rendement de la pompe.

Selon la présente invention, un conduit relie la chambre de sortie et la chambre de travail de la pompe, ce conduit étant ouvert lors du point mort du piston à la fin de la période de refoulement et fermé tout le reste du cycle. Avantageusement, c'est le piston qui assure la fermeture et l'ouverture du conduit.

De préférence, un deuxième clapet anti-retour de refoulement est disposé entre la chambre de sortie et un circuit utilisateur du fluide sous haute pression.

En outre, une restriction est avantageusement disposée entre ce deuxième clapet anti-retour et le circuit utilisateur.

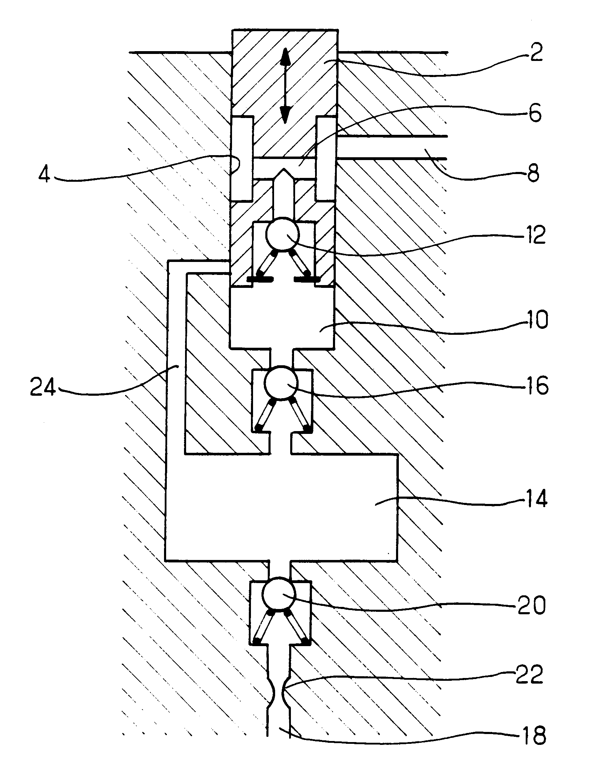

L'invention sera mieux comprise, et d'autres buts, avantages et caractéristiques de celle-ci apparaîtront plus clairement à la lecture de la description qui suit d'un mode préféré de réalisation donné à titre non limitatif et à laquelle une planche de dessin est jointe sur laquelle :
- la Figure unique représente schématiquement en coupe une pompe selon l'invention.

En référence maintenant plus particulièrement à cette Figure Unique, un piston 2 coulisse de façon alternative dans un cylindre 4, par exemple sous l'effet d'une came excentrée non représentée pilotée par un moteur électrique de façon conventionnelle. Ce piston 2 est pourvu d'un perçage approprié 6 pour relier par un conduit 8 une source de fluide sous basse pression (non représentée), à une chambre de travail 10 par l'intermédiaire d'un clapet anti-retour d'aspiration 12.

Dans l'exemple représenté, ce clapet anti-retour 12 est constitué par une bille fermant le perçage 6 sous l'effet d'un ressort.

La chambre de travail 10 communique avec une chambre de sortie de fluide sous haute pression 14 par l'intermédiaire d'un clapet anti-retour de refoulement 16 également constitué, dans l'exemple représenté par une bille chargée par un ressort.

Un circuit utilisateur de fluide sous haute pression est relié au conduit de sortie 18 qui est lui même en communication avec la chambre de sortie 14 par l'intermédiaire d'un deuxième clapet anti-retour 20 en série avec une restriction 22. Un conduit 24 relie la chambre de sortie 14 et la chambre de travail 10. Ce conduit 24 est ouvert par le piston 2 en fin de période d'aspiration de la pompe et en début de période de refoulement, le piston 2 fermant le conduit 24 pendant le reste du cycle alternatif de fonctionnement.

En d'autres termes, le conduit 24 débouche dans la chambre de travail 10 à proximité de ce que l'homme du métier appelle "le point mort bas" de la pompe (en haut sur la Figure), c'est-à-dire à proximité du point où le piston 2 s'arrête et où sa vitesse change de signe.

Le fonctionnement de la pompe ne sera pas décrit en détail ici car il est considéré comme connu de tout technicien. Toutefois, on constatera qu'à la fin de la période d'aspiration, le piston 2 ouvre le conduit 24 et la chambre de travail 10 est alors gavée avec du fluide sous haute pression en provenance de la chambre de sortie 14. Simultanément la pression dans cette dernière chambre 14 baisse légèrement. Lorsque le piston 4 commence la période de refoulement, d'une part la chambre de travail 10 est complètement gavée et d'autre part la différence des pressions entre les chambres de travail 10 et de sortie 14 est sensiblement réduite.

On obtient ainsi une réduction notable des bruits et vibrations consécutifs aux différents à coups par rapport à ceux des systèmes de pompe n'incorporant pas l'invention.

Le deuxième clapet anti-retour 20 et la restriction 22 permettent alors avantageusement d'assurer une certaine régulation de la pression dans le circuit utilisateur.

Bien que seul un mode préféré de réalisation ait été représenté, il est évident que de nombreuses modifications peuvent être apportées par l'homme du métier sans sortir du cadre de la présente invention tel que défini par les revendications annexées.

## Revendications

1. Pompe hydraulique comportant au moins un piston (2) à cycle alternatif coulissant dans un cylindre fixe (4), la dite pompe comportant en outre un clapet anti-retour d'aspiration (12) disposé entre une source de fluide sous basse pression et une chambre de travail (10) définie dans le cylindre (4), et un premier clapet anti-retour (16) de refoulement disposé entre la dite chambre de travail (10) et une chambre de sortie (14) du fluide sous haute pression, caractérisée en ce qu'un conduit (24) relie la dite chambre de sortie (14) et la dite chambre de travail (10), le dit conduit (24) étant ouvert lors du point mort du piston (2) à la fin de la période d'aspiration avant le début de la période de refoulement, et fermé tout le reste du cycle.

2. Pompe hydraulique selon la revendication 1, caractérisé en ce que l'ouverture et la fermeture du dit conduit (24) sont assurées par le dit piston (2).

3. Pompe hydraulique selon la revendication 1 ou 2, caractérisée en ce qu'un deuxième clapet anti-retour (20) de refoulement est disposé entre la dite chambre de sortie (14) et un circuit utilisateur du fluide sous haute pression.

4. Pompe hydraulique selon la revendication 3, caractérisée en ce qu'une restriction (22) est disposée entre le dit deuxième clapet anti-retour (20) et le dit circuit utilisateur.

## Claims

1. A hydraulic pump comprising at least one reciprocating piston (2) sliding in a stationary cylinder (4), said pump comprising, furthermore, a non-return suction valve (12) arranged between a source of fluid under low pressure and a working chamber (10) defined in the cylinder (4), and a first non-return delivery valve (16) arranged between said working chamber (10) and an outlet chamber (14) for the fluid under high pressure, characterized in that a conduit (24) connects said outlet chamber (14) and said working chamber (10). Said conduit (24) being opened at the dead center of the piston (2) at the end of the suction period before the beginning of the delivery period and closed during the rest of the cycle.

2. The hydraulic pump according to Claim 1, characterized in that the opening and the closing of said conduit (24) are controlled by said piston (2).

3. The hydraulic pump according to Claim 1 or 2, characterized in that a second non-return delivery valve (20) is arranged between said outlet chamber (14) and a circuit using the fluid under high pressure.

4. The hydraulic pump according to Claim 3, characterized in that a restriction (22) is arranged between said second non-return valve (20) and said user circuit.

## Patentansprüche

1. Hydraulikpumpe mit wenigstens einem Kolben (2), der in einer hin- und hergehenden Bewegung in einem festen Zylinder (4) gleitet, wobei die Pumpe ferner enthält: ein Ansaugrückschlagventil (12), das zwischen einer Quelle von unter niedrigen Druck stehenden Fluid und einer im Zylinder (4) abgegrenzten Arbeitskammer (10) angeordnet ist, und ein erstes Förderrückschlagventil (16), das zwischen der Arbeitskammer (10) und einer Ausgangskammer (14) für unter hohem Druck stehenden Fluid angeordnet ist, dadurch gekennzeichnet, daß eine Leitung (24) die Ausgangskammer (14) mit der Arbeitskammer (10) verbindet, wobei die Leitung (24) im Totpunkt des Kolbens (2) am Ende des Ansaugabschnitts vor dem Beginn des Förderabschnitts geöffnet ist und während des gesamten Restes der Bewegung geschlossen ist.

2. Hydraulikpumpe nach Anspruch 1, dadurch gekennzeichnet, daß das Öffnen und das Schließen der Leitung (24) von dem Kolben (2) bewirkt wird.

3. Hydraulikpumpe nach Anspruch 1 oder 2, dadurch gekennzeichnet, daß ein zweites Förderrückschlagventil (20) zwischen der Ausgangskammer (14) und einem Verbraucherkreis der unter hohem Druck stehenden Fluids angeordnet ist.

4. Hydraulikpumpe nach Anspruch 3, dadurch gekennzeichnet, daß eine Drosselstelle (22) zwischen dem zweiten Rückschlagventil (20) und dem Verbraucherkreis angeordnet ist.
